# EUROPEAN PATENT APPLICATION

(11) **EP 4 600 659 A1**
(43) Date of publication of application: **13.08.2025**
(21) Application number: 23874571.5
(22) Date of filing: 30.08.2023
(51) Int. Cl.: G01N 35/10

(54) **AUTOMATIC ANALYSIS DEVICE AND METHOD FOR CLEANING PROBE**

(30) Priority: 06.10.2022 JP 2022161553
(71) Applicant: HITACHI HIGH-TECH CORPORATION, Tokyo 105-6409 (JP)
(72) Inventor: TANAKA Yuto, Tokyo 105-6409 (JP); MORI Takamichi, Tokyo 105-6409 (JP)
(74) Representative: MERH-IP Matias Erny Reichl Hoffmann Patentanwälte PartG mbB
(86) International application number: PCT/JP2023/031517
(87) International publication number: WO 2024/075441

(57) **Abstract**

The purpose of the present invention is to provide: an automatic analyzer that reduces the frequency of manual cleaning of a probe and that has a higher analysis efficiency; and a method for cleaning a probe. For this purpose, an automatic analyzer according to the present invention comprises: a probe that dispenses a liquid; and a clogging detection unit that detects clogging of the probe. When the clogging detection unit detects clogging of the probe, the probe is cleaned with a liquid having an adjusted temperature. In addition, a method for cleaning a probe that dispenses a liquid according to the present invention involves cleaning the probe with a liquid having an adjusted temperature when a clogging detection unit detects clogging of the probe.

## Description

### Technical Field

The present invention relates to an automatic analyzer and a method for cleaning a probe for qualitative and quantitative analysis of specimens such as serum and urine.

### Background Art

The automatic analyzer discharges a certain amount of a specimen and a certain amount of a reagent into a reaction vessel and mixes the specimen and the reagent.

The dispensing mechanism in the automatic analyzer is a mechanism that automatically performs liquid dispensing and, for example, the specimen dispensing mechanism dispenses specimens such as serum and urine into a plurality of reaction vessels. The dispensing mechanism includes pipes such as a metal elongated probe, a tube connected to the probe, a dispensing syringe connected to the tube, and the like. The pipes of the dispensing mechanism are usually filled with system water as a liquid that performs a function of pressure transmission. Therefore, a plunger of the dispensing syringe is reciprocated to change a pressure in the pipe, thereby causing aspiration and discharge of the specimen.

Since recent automatic analyzers require accurate aspiration of trace amount of specimens, a tip of the probe is very thin. During aspiration of the specimen, if a blood coagulant or a fibrin contained in the specimen enters the inside of the probe, the probe may be clogged and dispensing accuracy of the liquid may deteriorate.

Accordingly, PTL 1 discloses an automatic analyzer that detects that an abnormality occurred due to clogging of a dispensing probe based on data from a detector that detects a pressure in the dispensing probe. In PTL 1, it is also disclosed that when an abnormality occurs, water supplied from a pump is discharged from the dispensing probe to a cleaning tank to clean the dispensing probe.

### Citation List

### Patent Literature

PTL 1: JP2014-157073A

### Summary of Invention

### Technical Problem

However, as described in PTL 1**,** it may not be possible to remove clogging of a probe simply by discharging water from the probe. To reduce cross-contamination of the specimen, a cleaning technique is known to immerse a probe in a cleaner containing a detergent, but even if such a cleaning operation is performed when the probe is clogged, an effect of removing the clogging is weak. If the clogging cannot be removed by operation of the device, a user or the like needs to stop the device, remove the probe from the device, and clean the probe manually, becoming one of factors that deteriorate analysis efficiency.

An object of the present invention is to provide an automatic analyzer and a method for cleaning a probe with less frequency of manual cleaning of the probe and increased analysis efficiency.

### Solution to Problem

To solve the above-mentioned problem, the present invention is characterized in that an automatic analyzer includes a probe for dispensing a liquid, and a clogging detection unit that detects clogging of the probe, in which the probe is cleaned by a temperature-adjusted liquid when the clogging detection unit detects the clogging of the probe.

### Advantageous Effects of Invention

According to the present invention, it is possible to provide an automatic analyzer and a method for cleaning the probe with less frequency of manual cleaning of the probe and increased analysis efficiency.

### Brief Description of Drawings

[FIG. 1] FIG. 1 is an overall configuration diagram showing an outline of an automatic analyzer.
[FIG. 2] FIG. 2 is a schematic configuration diagram of a specific cleaning tank with temperature adjustment function and a probe cleaner supply mechanism.
[FIG. 3] FIG. 3 is a configuration diagram of the specific cleaning tank with temperature adjustment function.
[FIG. 4] FIG. 4 is a flowchart showing a flow of clogging determination and clogging removal of a probe.
[FIG. 5] FIG. 5 is a flowchart showing an operation when clogging occurs in a specimen dispensing probe during dispensing of a plurality of specimens.
[FIG. 6] FIG. 6 is a flowchart showing a modification of the operation of FIG. 5.

### Description of Embodiments

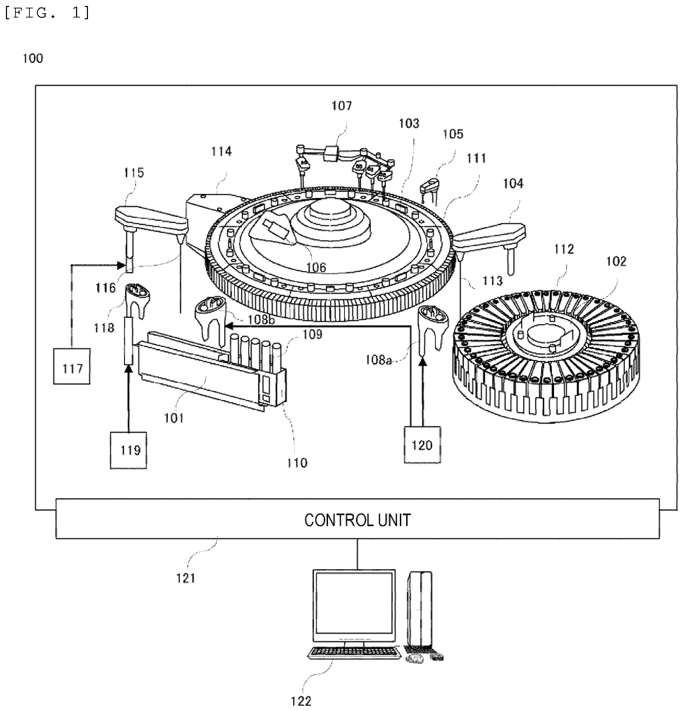

FIG. 1 is an overall configuration diagram showing an outline of an automatic analyzer 100 according to the present embodiment. As shown in FIG. 1, the automatic analyzer 100 includes a transport line 101, a reagent disk 102, a reagent dispensing mechanism 104, a reaction disk 103, a specimen dispensing mechanism 115, an agitation mechanism 105, a light source 106, a spectrometer 114, a cleaning mechanism 107, normal cleaning tanks 108a and 108b (first cleaning tank), a specific cleaning tank 118 with temperature adjustment function (second cleaning tank), a control unit 121, a computer 122, and the like.

The transport line 101 transports a specimen rack 110 that holds a specimen container 109 containing a specimen to a position where the specimen dispensing mechanism 115 aspirates the specimen. The reagent disk 102 holds a reagent container 112 containing a reagent, and rotates and transports the reagent container 112 to be dispensed to a position where the reagent dispensing mechanism 104 aspirates the reagent. The reagent dispensing mechanism 104 aspirates the reagent that reacts with components in the specimen to be analyzed from the reagent container 112 and discharges the reagent into a reaction vessel 111. The reaction disk 103 holds the reaction vessel 111 (reaction cell) containing a mixture of the specimen and the reagent on a thermostatic medium such as water, and rotates and transports the target reaction vessel 111 to an operating position of the agitation mechanism 105, the spectrometer 114, the cleaning mechanism 107, and the like.

The specimen dispensing mechanism 115 aspirates the specimen from the specimen container 109 and discharges the specimen into the reaction vessel 111. Note that the specimen dispensing mechanism 115 includes a clogging detection unit 117 such as a pressure sensor provided in a pipe of the specimen dispensing mechanism 115. A detection result by the clogging detection unit 117 is transmitted to the control unit 121 and the like, so that whether clogging occurs in a specimen dispensing probe 116 during the specimen dispensing operation can be monitored. A material of the specimen dispensing probe 116 is not particularly limited and is, for example, made of metal.

The agitation mechanism 105 promotes a reaction of a mixed solution of the specimen dispensed from the specimen container 109 to the reaction vessel 111 and the reagent dispensed from the reagent container 112 to the reaction vessel 111 by agitation of the mixed solution in the reaction vessel 111. The light source 106 irradiates light on the reaction solution agitated by the agitation mechanism 105 to cause chemical reaction. The spectrometer 114 spectroscopically measures absorbance of light transmitted from the reaction solution. Information on the absorbance is transmitted to the control unit 121 and the like, and a concentration of a predetermined component contained in the specimen is obtained by colorimetric analysis. The cleaning mechanism 107 is a mechanism for cleaning the used reaction vessel 111.

The normal cleaning tanks 108a and 108b are tanks cleaned with water on the inside and outside of the probe to prevent residues on a tip of the probe from affecting the next analysis. Specifically, in the normal cleaning tank 108a, a reagent dispensing probe 113 of the reagent dispensing mechanism 104 is cleaned, and in the normal cleaning tank 108b, the specimen dispensing probe 116 of the specimen dispensing mechanism 115 is cleaned. The inside of the probe is cleaned by system water filled in the pipe of the probe being discharged from the probe into the normal cleaning tanks 108a and 108b. Meanwhile, the outside of the probe is cleaned by water from a water supply mechanism 120 being sprayed toward the outside of the probe.

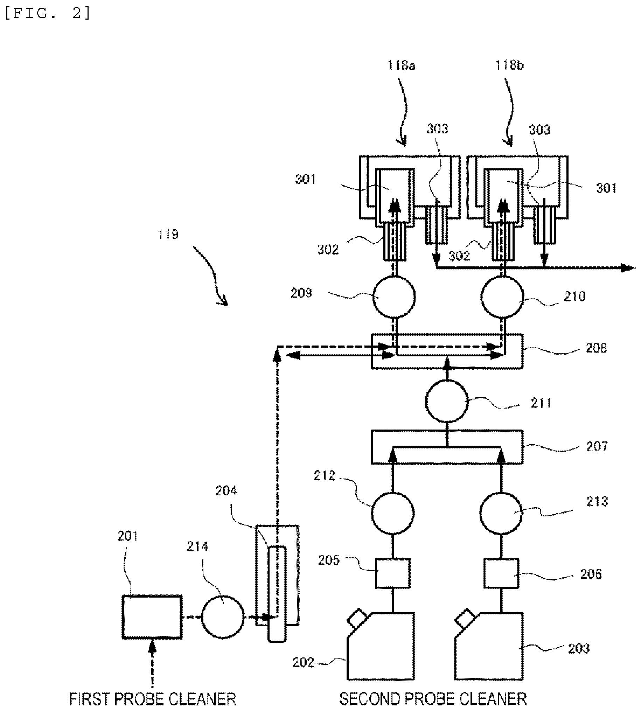

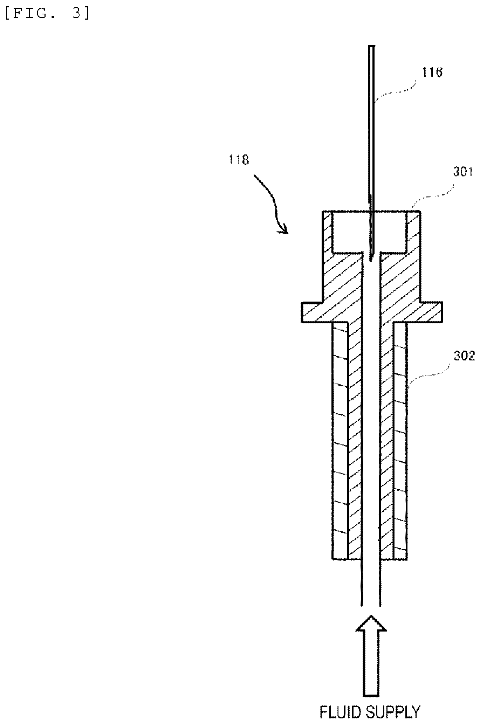

The specific cleaning tank 118 with temperature adjustment function is a tank that cleans residues with a probe cleaner containing a detergent, as the residues cannot be completely cleaned by normal cleaning using water from the normal cleaning tanks 108a and 108b. In particular, for analysis items susceptible to cross-contamination between specimens affecting analysis results, the probe is cleaned in the specific cleaning tank 118 with temperature adjustment function after dispensing the previous specimen and before dispensing the next specimen. Therefore, the specific cleaning tank 118 with temperature adjustment function is capable of storing a room temperature probe cleaner supplied from a probe cleaner supply mechanism 119 and heating the stored probe cleaner. Here, the probe cleaner supply mechanism 119 can supply water in addition to the detergent as a probe cleaner, and a specific structure thereof will be described later using FIG. 2. A specific structure of the specific cleaning tank 118 with temperature adjustment function will be described later with reference to FIGS. 2 and 3**.** Note that, when performing specific cleaning with a probe cleaner containing a detergent, a temperature-adjusted (heated) probe cleaner may be used, or a room temperature probe cleaner may be used.

The control unit 121 controls operation of each of the described mechanisms and performs analysis based on the measurement result of the spectrometer 114. The control unit 121 also controls a cleaning operation of the probe as described later.

The computer 122 includes an output unit, an input unit, and a storage unit. The output unit displays an analysis result, an alarm, and the like to the user, and is a display, for example.

The input unit is provided for the user to input text and numbers and set operating conditions of the device, and is a keyboard, for example. The storage unit is a unit that stores an analysis result and a setting value, and is a memory, for example.

FIG. 2 is a schematic configuration diagram of the specific cleaning tank 118 with temperature adjustment function and the probe cleaner supply mechanism 119**.**

First, the specific cleaning tank 118 with temperature adjustment function includes a liquid storage unit 301 for storing the probe cleaner supplied from the probe cleaner supply mechanism 119, a temperature adjustment heater 302 for heating the liquid storage unit 301, and a lower opening 303 for discharging overflowed probe cleaner from the liquid storage unit 301. The structure of the specific cleaning tank 118 with temperature adjustment function will be further described later with reference to FIG. 3. Note that in the example of FIG. 2, two specific cleaning tanks 118a and 118b with temperature adjustment function are shown as the specific cleaning tank 118 with temperature adjustment function, but when there is one specimen dispensing mechanism 115 as shown in FIG. 1, one specific cleaning tank 118 with temperature adjustment function may be used. Meanwhile, the probe cleaner supply mechanism 119 is a mechanism for supplying the probe cleaner to the liquid storage unit 301 of the specific cleaning tank 118 with temperature adjustment function, and includes a probe cleaner supply pump 201, a probe cleaner supply syringe 204, solenoid valves 209 to 214, probe cleaner residual sensors 205 and 206, and branch pipes 207 and 208.

The probe cleaner supply pump 201 delivers a first probe cleaner from a tank containing the first probe cleaner or the like (not shown). The first probe cleaner is a probe cleaner containing, for example, water or a neutral detergent. The probe cleaner supply syringe 204 further delivers the first probe cleaner from the probe cleaner supply pump 201 to the downstream side. The solenoid valve 214 controls a flow of the first probe cleaner from the probe cleaner supply pump 201 to the probe cleaner supply syringe 204. The probe cleaner residual sensor 205 detects a residual amount of a second probe cleaner contained in a probe cleaner storage tank 202, and the probe cleaner residual sensor 206 detects a residual amount of the second probe cleaner contained in a probe cleaner storage tank 203. The second probe cleaner is a probe cleaner containing, for example, an alkaline detergent or an acidic detergent. The solenoid valve 212 controls a flow of the second probe cleaner from the probe cleaner storage tank 202 to the branch pipe 207, and the solenoid valve 213 controls a flow of the second probe cleaner from the probe cleaner storage tank 203 to the branch pipe 207. The branch pipe 207 is a pipe that joins supply lines of the second probe cleaner from the probe cleaner storage tank 202 and the second probe cleaner from the probe cleaner storage tank 203, and sends the supplied second probe cleaner to the branch pipe 208. The solenoid valve 211 controls a flow of the second probe cleaner from the branch pipe 207 to the branch pipe 208. The branch pipe 208 is a pipe that joins supply lines of the first probe cleaner from the probe cleaner supply syringe and the second probe cleaner from the branch pipe 207, and sends the supplied first probe cleaner or the supplied second probe cleaner to the liquid storage unit 301 of the specific cleaning tank 118 with temperature adjustment function. The solenoid valve 209 controls a flow of the first probe cleaner and the second probe cleaner from the branch pipe 208 to the liquid storage unit 301 of the specific cleaning tank 118a with temperature adjustment function. The solenoid valve 210 controls a flow of the first probe cleaner and the second probe cleaner from the branch pipe 208 to the liquid storage unit 301 of the specific cleaning tank 118b with temperature adjustment function.

Such the probe cleaner supply mechanism 119 can supply the first probe cleaner or the second probe cleaner to the liquid storage unit 301. It is also possible to replace an old second probe cleaner stored in the liquid storage unit 301 with a new second probe cleaner. Similarly, the first cleaning stored in the liquid storage unit 301 can be replaced with the second probe cleaner, or the second probe cleaner stored in the liquid storage unit 301 can be replaced with the first probe cleaner. Based on a detection status of the probe cleaner residual sensors 205 and 206, it is also possible to switch sources of the second probe cleaner between the probe cleaner storage tank 202 and the probe cleaner storage tank 203. In the example of FIG. 2, the probe cleaner supply mechanism 119 is provided with two probe cleaner storage tanks, thereby having a changeover function of the second probe cleaner. However, the probe cleaner supply mechanism 119 may only include one probe cleaner storage tank and may have a changeover function of the second probe cleaner.

Next, a configuration of the specific cleaning tank 118 with temperature adjustment function will be described in detail with reference to FIG. 3.

FIG. 3 is a configuration diagram of the specific cleaning tank 118 with temperature adjustment function, and the lower opening 303 is omitted in the drawing. As shown in FIG. 3, since the temperature adjustment heater 302 is wrapped around an outer circumference of a lower part of the liquid storage unit 301, it is possible to heat the probe cleaner in the liquid storage unit 301. The temperature adjustment heater 302 may be provided in the probe cleaner supply mechanism 119, but the probe cleaner can be efficiently heated in a limited position if the temperature adjustment heater 302 is provided in the liquid storage unit 301 on the downstream side of the probe cleaner supply mechanism 119. For temperature adjustment of the temperature adjustment heater 302, the temperature of the probe cleaner or the temperature adjustment heater 302 measured by a temperature sensor such as a thermistor or thermocouple (not shown in the drawing) is used. A set temperature when adjusting the temperature of the probe cleaner is, for example, 40 °C to 70 °C. The set temperature may be appropriately changed by the user according to characteristics of the specimen or the probe cleaner to be dispensed. By aspirating and discharging a small amount of the probe cleaner with the specimen dispensing probe 116 immersed in a probe cleaner with a relatively high temperature in the liquid storage unit 301, residues such as fibrin and blood coagulant attached to the inside and outside of the specimen dispensing probe 116 can be removed. Hereinafter, the probe cleaning operation with the temperature-adjusted probe cleaner may be referred to as temperature-adjusted cleaning.

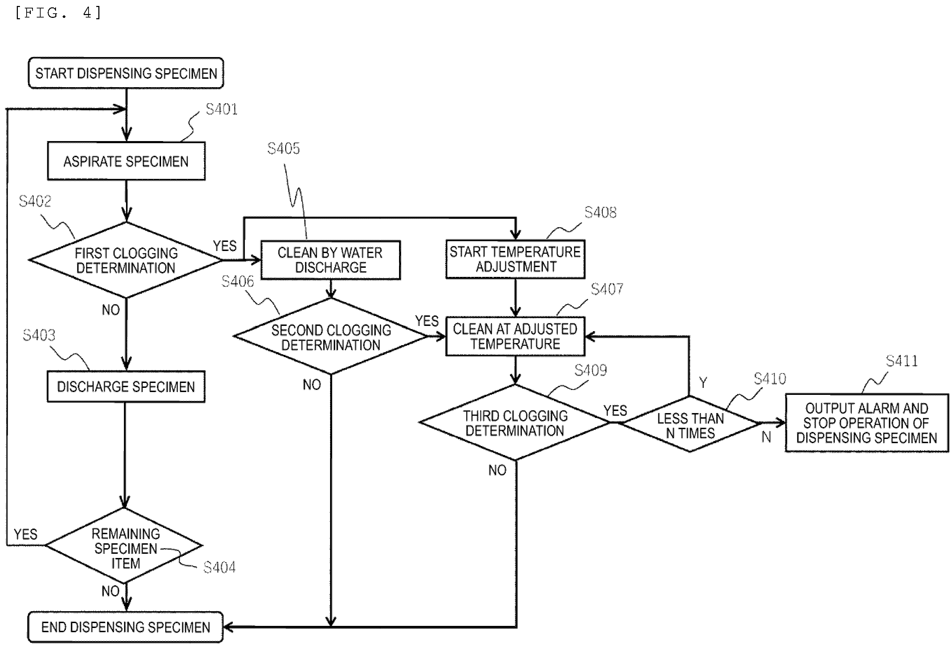

FIG. 4 is a flowchart showing the flow of clogging determination and clogging removal of the probe.

First, after the transport line 101 transports the specimen container 109 to a specimen dispensing position, the specimen dispensing probe 116 aspirates the specimen contained in the specimen container 109 (step S401). Here, the control unit 121 performs a first clogging determination of the specimen dispensing probe 116, that is, determines whether the specimen dispensing probe 116 is clogged based on the detection result by the clogging detection unit 117 when the specimen is aspirated (step S402).

If it is determined that the specimen dispensing probe 116 is not clogged, the specimen dispensing mechanism 115 rotates to a position above the reaction vessel 111 to discharge the specimen into the reaction vessel 111 (step S403). Thereafter, the control unit 121 determines whether other analysis items remain for the specimen (step S404).

If there are remaining items, the process returns to step S401 described above and dispensing of the specimen is continued, and if there are no remaining items, the dispensing operation of the specimen is completed.

Meanwhile, if it is determined in step S402 that the specimen dispensing probe 116 is clogged, water discharge cleaning (first clogging removal operation) of the specimen dispensing probe 116 is performed (step S405). Specifically, the control unit 121 rotates the specimen dispensing mechanism 115 to the position of the normal cleaning tank 108b, and causes the liquid in the pipe to be discharged from the specimen dispensing probe 116 on the normal cleaning tank 108b. Here, the liquid to be discharged is not limited to the system water filled in the pipe of the specimen dispensing probe 116, and as long as the liquid is directly supplied by the pipe of the specimen dispensing probe 116 and performs the function of pressure transmission, the liquid may be other than water.

Then, the control unit 121 performs a second clogging determination of the specimen dispensing probe 116, that is, determines again whether the specimen dispensing probe 116 is clogged based on the detection result by the clogging detection unit 117 when the specimen is aspirated (step S406). If it is determined that the specimen dispensing probe 116 is not clogged, the dispensing operation of the specimen is completed. Note that, when it is determined in step S406 that the specimen dispensing probe 116 is not clogged, the control unit 121 may proceed to the above-mentioned step S404.

Meanwhile, if it is determined in step S406 that the specimen dispensing probe 116 is clogged, temperature-adjusted cleaning (second clogging removal operation) of the specimen dispensing probe 116 is performed (step S407). Specifically, the control unit 121 rotates the specimen dispensing mechanism 115 to the position of the specific cleaning tank 118 with temperature adjustment function, and causes the specimen dispensing mechanism 115 to perform aspiration and discharge while the specimen dispensing probe 116 is immersed in the temperature-adjusted probe cleaner in the liquid storage unit 301. Note that the probe cleaner aspirated by the specimen dispensing mechanism 115 may be discharged in the normal cleaning tank 108b after the specimen dispensing mechanism 115 is moved to the normal cleaning tank 108b. Since it takes a certain amount of time for the temperature of the probe cleaner to be adjusted to the set temperature, if it is determined in step S402 that clogging occurred, it is desirable to start the temperature adjustment of the temperature adjustment heater 302 in parallel with the water discharge cleaning in step S405 (step S408).

Then, the control unit 121 performs a third clogging determination of the specimen dispensing probe 116, that is, determines again whether the specimen dispensing probe 116 is clogged based on the detection result by the clogging detection unit 117 when the specimen is aspirated (step S409). If it is determined that the specimen dispensing probe 116 is not clogged, the dispensing operation of the specimen is completed. Note that, when it is determined in step S409 that the specimen dispensing probe 116 is not clogged, the control unit 121 may proceed to the above-mentioned step S404. Note that the temperature of the specimen dispensing probe 116 is high immediately after the temperature-adjusted cleaning, and thus, dispensing accuracy may be reduced if the specimen is dispensed as it is. Therefore, it is desirable to cool the specimen dispensing probe 116 as described later.

Meanwhile, if it is determined in step S409 that the specimen dispensing probe 116 is clogged, the control unit 121 determines whether the number of performances of the temperature-adjusted cleaning is less than N times as a threshold value (step S410). If it is determined in step S410 that the number of performances is less than N times, the process returns to step S407 described above and the temperature-adjusted cleaning is performed again. Note that the threshold value used in determination can be changed in advance by the user, and may be (N =) 1. The set temperature may be increased or a time for immersing the specimen dispensing probe 116 in the probe cleaner may be increased whenever the temperature-adjusted cleaning is repeated. If it is determined in step S410 that the number of performances is N times or more, the control unit 121 prompts the user to perform the cleaning operation of the specimen dispensing probe 116 by outputting an alarm and stops the specimen dispensing operation (step S411).

As such, by performing the temperature-adjusted cleaning appropriately, clogging of the specimen dispensing probe 116 that cannot be removed by the room temperature probe cleaner can be removed, and a labor of manually cleaning the probe can be reduced as much as possible, thereby leading to an improvement in analysis efficiency. Note that in the example of FIG. 4, a flow is configured such that water discharge cleaning in step S405 is performed if clogging is detected in the first clogging determination in step S402, but the water discharge cleaning may be omitted and the temperature-adjusted cleaning may be performed immediately. The user may be able to set whether it is necessary to perform temperature-adjusted cleaning.

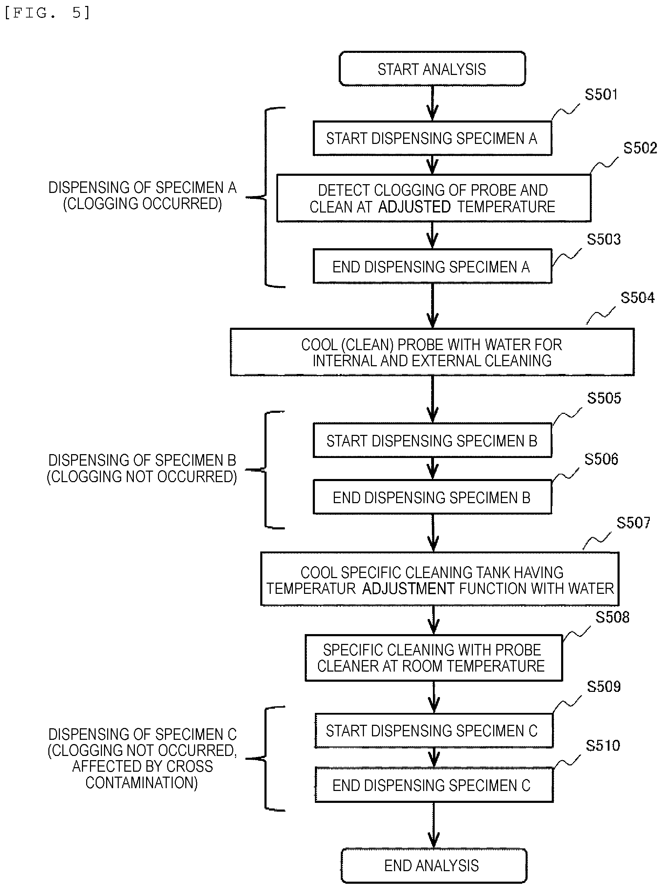

FIG. 5 is a flowchart showing an operation when clogging occurs in the specimen dispensing probe 116 during dispensing of a plurality of specimens. Here, specimens A to C obtained from different patients are assumed as a plurality of specimens. When dispensing the specimen A, clogging occurs in the specimen dispensing probe 116 and temperature-adjusted cleaning is performed, and since cross-contamination easily affects the analysis result, it is assumed that specific cleaning with the room temperature probe cleaner is set between the specimen B and the specimen C.

First, the specimen dispensing mechanism 115 starts dispensing the specimen A contained in the specimen container 109 (step S501). Then, the clogging detection unit 117 detects clogging of the specimen dispensing probe 116, and the temperature-adjusted cleaning of the specimen dispensing probe 116 is performed in the specific cleaning tank 118 with temperature adjustment function (step S502). Next, the temperature adjustment stops and the dispensing of the specimen A is completed (step S503). Here, the temperature of the specimen dispensing probe 116 is higher than normal. Accordingly, when the next dispensing operation is performed as it is and the next specimen B is aspirated, the specimen B is heated in the specimen dispensing probe 116 and the specimen dispensing probe 116 attempts to fall to the room temperature, so that dispensing accuracy of the specimen B is reduced as a result. Accordingly, the control unit 121 rotates the specimen dispensing mechanism 115 to the position of the normal cleaning tank 108b, and then discharges the water in the pipe from the specimen dispensing probe 116 on the normal cleaning tank 108b while sprinkling the water outside the specimen dispensing probe 116 (step S504). Accordingly, the specimen dispensing probe 116 can be cooled while cleaning the inside and outside of the specimen dispensing probe 116**.**

Next, the specimen dispensing mechanism 115 starts dispensing the specimen B contained in the specimen container 109 (step S505), and the dispensing of the specimen B is completed without occurrence of the clogging of the specimen dispensing probe 116 (step S506).

Then, the specimen dispensing probe 116 is specifically cleaned with a room temperature probe cleaner before dispensing the specimen **C.** However, the probe cleaner in the liquid storage unit 301 of the specific cleaning tank 118 with temperature adjustment function is still in the high temperature state because the temperature-adjusted cleaning was performed in step S502. Accordingly, the control unit 121 cools the specific cleaning tank 118 with temperature adjustment function with water in any of the following methods before the specific cleaning (step S507). A first cooling method is a method in which the water in the pipe is discharged from the specimen dispensing probe 116 on the specific cleaning tank 118 with temperature adjustment function and is supplied to the liquid storage unit 301. A second cooling method is a method in which the probe cleaner supply mechanism 119 supplies water to the liquid storage unit 301 as a first probe cleaner. After the liquid storage unit 301 of the specific cleaning tank 118 with temperature adjustment function is cooled in any method, the probe cleaner supply mechanism 119 supplies the probe cleaner containing the detergent as the second probe cleaner into the liquid storage unit 301, and replaces the water that contributed to the cooling with the room temperature probe cleaner.

Next, the control unit 121 performs specific cleaning by causing of the specimen dispensing mechanism to perform aspiration and discharge while the specimen dispensing probe 116 is immersed in the room temperature probe cleaner in the liquid storage unit 301 (step S508).

Then, the specimen dispensing mechanism 115 starts dispensing the specimen C contained in the specimen container 109 (step S509), and the dispensing of the specimen C is completed without occurrence of the clogging of the specimen dispensing probe 116 (step S510).

Note that in the example shown in FIG. 5, after the temperature-adjusted cleaning is performed in step S502, the dispensing of the specimen A is completed, but if there are remaining items for the specimen A when the temperature-adjusted cleaning is performed, the dispensing of the specimen A may be retried. However, if the dispensing of the specimen A is retried immediately after the temperature-adjusted cleaning, dispensing accuracy will be reduced, and it is necessary to cool the specimen dispensing probe 116 as described in the above-mentioned step S504.

By the operation described above, even with one specific cleaning tank, both temperature-adjusted cleaning using a temperature-adjusted probe cleaner and specific cleaning using a room temperature probe cleaner can be performed, thereby contributing to lowering the cost of the automatic analyzer. When the temperature-adjusted cleaning is performed, the specific cleaning tank 118 with temperature adjustment function is not immediately cooled and is cooled immediately before the specific cleaning by the room temperature probe cleaner is performed, whereby the overall processing time can be shortened. However, if the cooling of the specific cleaning tank 118 with temperature adjustment function takes time, the cooling of the specific cleaning tank 118 with temperature adjustment function may be started when the temperature-adjusted cleaning is completed or when the dispensing of the specimen A is completed, and the cooling operation may continue in parallel with the dispensing of the specimen B. If the temperature-adjusted cleaning is performed and the specific cleaning is not performed for a certain period of time thereafter, the specific cleaning tank 118 with temperature adjustment function is naturally cooled without an operation such as the step S507.

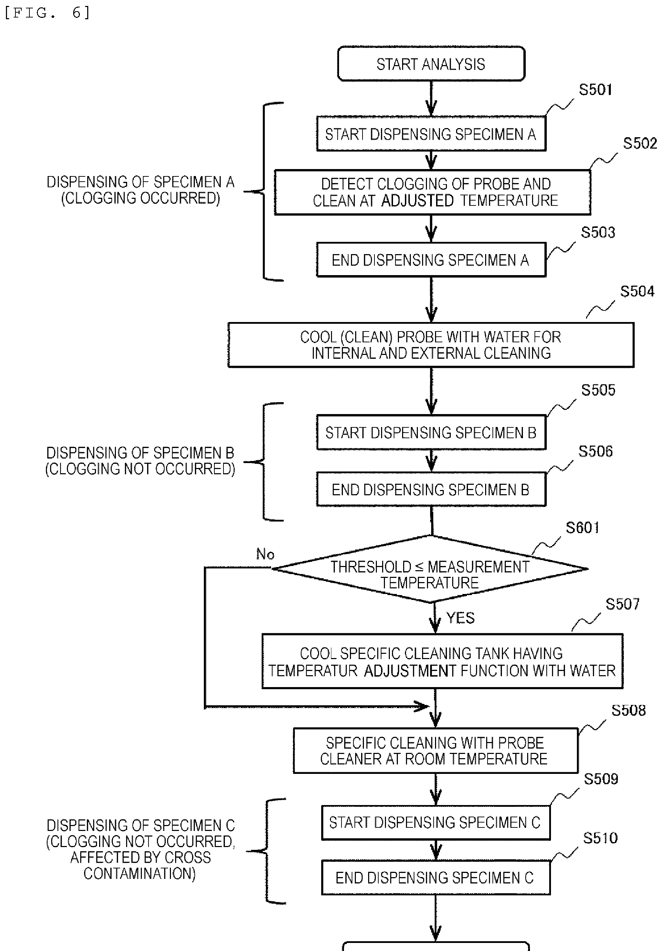

FIG. 6 is a flowchart showing a modification of the operation of FIG. 5. A difference from FIG. 5 is that step S601 for determining whether the specific cleaning tank 118 with temperature adjustment function is cooled according to the temperature measured by the temperature sensor is incorporated. As shown in FIG. 6, when the temperature measured by the temperature sensor provided for the temperature adjustment of the temperature adjustment heater 302 is a predetermined threshold value or more after the dispensing of the specimen B is completed, the process proceeds to step S507 described above, and the specific cleaning tank 118 with temperature adjustment function is cooled. Meanwhile, in step S601, when the temperature measured by the temperature sensor is less than the predetermined threshold value, the specific cleaning tank 118 with the temperature adjustment function according to step S507 is not cooled, and the process proceeds to the specific cleaning of step S508 described above. Note that the threshold value used in the determination of step S601 is, for example, 35°C to 45°C.

Although temperature-adjusted cleaning is performed only when clogging occurs in the above-described examples of FIGS. 5 and 6, temperature-adjusted cleaning may be performed whenever the specimen is dispensed regardless of whether clogging occurs to reduce a possibility that the specimen dispensing probe 116 is clogged as much as possible. Here, temperature-adjusted cleaning may be performed for each dispensing of different analysis items even for the same specimen, or temperature-adjusted cleaning may be performed each time the specimen changes. However, the cooling operation of the specimen dispensing probe 116 is required after the temperature-adjusted cleaning not to affect the next dispensing operation. The temperature-adjusted cleaning may be performed as a cleaning for not leaving dirt on the specimen dispensing probe 116, at a timing such as after the completion of a certain partial analysis operation, or may be performed at any timing according to a setting by the user.

Note that the present invention is not limited to the above-described embodiment, and various variations are possible. For example, in the foregoing embodiment, both temperature-adjusted cleaning and specific cleaning are performed in one specific cleaning tank, but a specific cleaning tank with temperature adjustment function may be provided for temperature-adjusted cleaning, and a specific cleaning tank without temperature adjustment function may be provided for specific cleaning. Although the foregoing embodiment describes a case of cleaning the specimen dispensing probe, the embodiment can also be applied to a case of cleaning the reagent dispensing probe. The dispensing probe is not limited to a probe that performs aspiration and discharge, and may only perform aspiration.

Although the foregoing embodiment describes an analyzer including a measuring unit that measures a mixed liquid in a reaction vessel as an example, the analyzer may be an analyzer including a measuring unit that measures light of a mixed liquid in a pipe that aspirates the mixed liquid from a reaction vessel. Other than the analyzer including the measuring unit for measuring the mixed liquid, the analyzer may be an analyzer including a measuring unit for measuring a voltage of a mixed liquid or a specimen, for example, an analyzer provided with an electrolyte measuring unit. That is, although the foregoing embodiment describes a case of cleaning a dispensing probe in a biochemical automatic analyzer, the embodiment can also be applied to a case of cleaning a dispensing probe in an immune automatic analyzer or a coagulation automatic analyzer.

### Reference Signs List

100: automatic analyzer
101: transport line
102: reagent disk
103: reaction disk
104: reagent dispensing mechanism
105: agitation mechanism
106: light source
107: cleaning mechanism
108a, 108b: normal cleaning tank
109: specimen container
110: specimen rack
111: reaction vessel
112: reagent container
113: reagent dispensing probe
114: spectrometer
115: specimen dispensing mechanism
116: specimen dispensing probe
117: clogging detection unit
118: specific cleaning tank with temperature adjustment function
119: probe cleaner supply mechanism
120: water supply mechanism
121: control unit
122: computer
201: probe cleaner supply pump
202, 203: probe cleaner storage tank
204: probe cleaner supply syringe
205, 206: probe cleaner residual sensor
207, 208: branch pipe
209 to 214: solenoid valve
301: liquid storage unit
302: temperature adjustment heater
303: lower opening

## Claims

1. An automatic analyzer comprising:
a probe for dispensing a liquid; and
a clogging detection unit for detecting clogging of the probe, wherein
the probe is cleaned by a temperature-adjusted liquid when the clogging detection unit detects the clogging of the probe.

2. The automatic analyzer according to claim 1, further comprising:
a first cleaning tank from which water is discharged through the probe; and
a second cleaning tank for storing a probe cleaner containing a detergent and heating the probe cleaner by a heater, wherein
a first clogging removal operation is performed by water supplied by a pipe being discharged through the probe from the first cleaning tank when the clogging detection unit detects the clogging of the probe, and a second clogging removal operation is performed by the heated probe cleaner being aspirated through the probe to the second cleaning tank when the clogging detection unit detects the clogging of the probe even after the first clogging removal operation is performed.

3. The automatic analyzer according to claim 2, wherein
the probe cleaner is heated in parallel with the first clogging removal operation.

4. The automatic analyzer according to claim 2, wherein
the probe is a specimen dispensing probe for dispensing a specimen, and
a normal cleaning is performed in the first cleaning tank to clean inside and outside of the specimen dispensing probe by water between a timing when the specimen dispensing probe completes dispensing a first specimen and a timing when the specimen dispensing probe starts dispensing a second specimen, and
specific cleaning is performed in the second cleaning tank to clean the specimen dispensing probe by the room temperature probe cleaner being aspirated through the specimen dispensing probe between a timing when the specimen dispensing probe completes dispensing the second specimen and a timing when the specimen dispensing probe starts dispensing a third specimen.

5. The automatic analyzer according to claim 4, wherein
the second cleaning tank is cooled by water between a timing when the second clogging removal operation is performed and a timing when the specific cleaning is performed.

6. The automatic analyzer according to claim 5, wherein
the second cleaning tank is cooled by water discharged from the specimen dispensing probe and then the water is replaced with the room temperature probe cleaner.

7. The automatic analyzer according to claim 5, wherein
the second cleaning tank includes a liquid supply mechanism for supplying water and a detergent solution into the tank, and
the second cleaning tank is cooled by water supplied into the tank by the liquid supply mechanism and then the water is replaced with the room temperature probe cleaner supplied into the tank by the liquid supply mechanism.

8. The automatic analyzer according to claim 5, wherein
the second cleaning tank includes a temperature sensor for measuring a temperature of the probe cleaner in the tank or a temperature of the heater, and
the second cleaning tank is not cooled if the temperature measured by the temperature sensor after the specimen dispensing probe completes dispensing the second specimen is less than a predetermined threshold value.

9. A method for cleaning a probe for dispensing a liquid, wherein
the probe is cleaned with a temperature-adjusted liquid when a clogging detection unit detects clogging of the probe.
